# EUROPÄISCHE PATENTSCHRIFT

(11) **EP 1 030 954 B1**
(45) Veröffentlichungstag und Bekanntmachung des Hinweises auf die Patenterteilung: **12.03.2003**
(21) Anmeldenummer: 98954391.3
(22) Anmeldetag: 10.10.1998
(51) Int. Cl.: E04D 11/00, E04D 13/16

(54) **TRÄGERBAHN FÜR WITTERUNGSEINFLÜSSEN AUSGESETZTE BODEN- ODER WANDBELÄGE**
SUPPORT SHEET FOR GROUND OR WALL COVERINGS WHICH ARE EXPOSED TO THE WEATHER
BANDE SUPPORT POUR REVETEMENTS DE SOL OU REVETEMENTS MURAUX EXPOSES AUX INTEMPERIES

(30) Priorität: 13.11.1997 DE 19750277
(43) Veröffentlichungstag der Anmeldung: 30.08.2000
(73) Patentinhaber: Gutjahr, Walter, 64404 Bickenbach (DE)
(72) Erfinder: Gutjahr, Walter, 64404 Bickenbach (DE)
(74) Vertreter: Helber, Friedrich G., Dipl.-Ing.
(86) Internationale Anmeldenummer: EP9806435
(87) Internationale Veröffentlichungsnummer: WO99025940

(56) Entgegenhaltungen:
- DE-A- 2 353 366
- DE-A- 3 045 390
- DE-A- 3 443 705
- DE-A- 4 120 777
- DE-U- 9 209 520
- DE-U- 29 622 724
- FR-A- 2 544 460
- US-A- 3 369 958

## Beschreibung

Die Erfindung betrifft eine Trägerbahn für Witterungseinflüssen ausgesetzte Boden- oder Wandbeläge, welche eine steife Kunststoffolie mit einem Muster von aus der Folienebene vortretenden, voneinander beabstandeten näpfchenartigen Vorsprüngen mit im wesentlichen ebenflächigen, parallel zur Folienebene verlaufenden Boden- bzw. Deckwänden aufweist, wobei die näpfchenartigen Vorsprünge abwechselnd von den gegenüberliegenden Seiten der Kunststofffolie vortreten.

Zwischen der heute durch aufkaschierte Folien oder Bitumenbahnen oder - in neuerer Zeit - auch durch Dichtschlämme oder Flüssigfolie gegen Eindringen von Feuchtigkeit abgedichteten Oberseite von Witterungseinflüssen ausgesetzten Untergründen, wie Balkonen oder Terrassen werden heute in vielen Fällen zwischen dem eigentlichen Bodenbelag in Form von Beton-Tragplatten oder Fliesen und der abgedichteten Oberfläche Trägerbahnen angeordnet, welche durch die Beläge bzw. deren Fugen eindringende Regenwasser in Kanälen sammeln und abführen. Über die Kanäle wird auch eine Belüftung und Durchtrocknung des die Beläge fixierenden Mörtels bzw. Klebers von der Unterseite aus erreicht. Eine solche Trägerbahn ist z.B. in dem nicht vorveröffentlichten DE-Gebrauchsmuster 298 06 561.4 beschrieben, die insbesondere für die Dünnbettverlegung von Boden-Fliesen oder Beton-Trägerplatten geeignet ist und sich - insbesondere auch für Reparaturen von schadhaft gewordenen Balkon- oder Terrassenbeläge anbietet. Dabei hat sich als zusätzlicher Vorteil dieser aus einer eigensteifen, durch aufeinanderfolgend in dichtem Abstand parallel verlaufende streifenförmige, jeweils gegensinnig umgekantete Abschnitte mit abwechselnd an der Ober- und der Unterseite gebildeten Kanälen versehene Kunststoffolie herausgestellt, daß die Folie auf der Abdichtung des Untergrunds nur lose aufgesetzt ist, so daß bei unterschiedlichen Dehnungen des Belags und des Untergrunds - beispielsweise infolge von sich ändernden Temperaturen - keine Scherkräfte vom Belag in die Abdichtschicht übertragen werden. Die an der Oberseite vorgesehenen Kanäle stehen dabei mit den zur Unterseite, d.h. der abgedichteten Oberfläche des Untergrunds weisenden Kanälen über durchgehende Öffnungen in Verbindung, so daß also von der Belagseite in den Mörtel oder Kleber und die nach oben offenen mörtelgefüllten Kanäle eingedrungenes Wasser durch die Öffnung in die an der Unterseite vorgesehenen offenen Kanäle abgeführt und die Mörtelschicht so entwässert und getrocknet werden kann. Allerdings ist das Entwässerungsvermögen begrenzt, wodurch sich insbesondere bei der Sanierung von Balkonen und Terrassen, bei denen im Bereich von Türen in der Gebäudewandung keine ausreichende Anschlußhöhe gegeben ist, Probleme ergeben. Hier sind Anschlußhöhen von 150 mm vorgeschrieben, sofern nicht das bei starken Regenfällen auf der Balkon- oder Terrassenoberseite anfallende Niederschlagswasser über vor den Türdurchbrüchen vorgesehenen Drainagerosten abgeführt werden kann. Dann kann die Anschlußhöhe auf 50 mm reduziert werden. Insbesondere bei Balkonsanierungen ist aber die Höhe der ursprünglichen Belags- und Estrichschicht nicht hinreichend, um hier solche Drainroste wirksam installieren zu können, weil keine ausreichende Abfuhr des Niederschlagswasser verwirklichbar ist.

Aus der DE-U-92 09 520 ist eine als Träger für Nutzbeläge, wie Geh- oder Fahrbeläge vorgesehene flexible Bahn bekannt, welche von einer mittleren, relativ dicken flexiblen Trägerschicht aus Kautschuk mit von den gegenüberliegenden Seiten einstückig vortretenden Vorsprüngen bekannt. Die unterseitigen Vorsprünge halten die Trägerschicht mit Abstand oberhalb des eigentlichen Untergrunds, auf welchem die Geh- oder Fahrbeläge aufgebracht werden sollen, so dass zwischen der Trägerschicht und dem Untergrund miteinander verbundene Hohlräume gebildet sind, über welche von der Oberseite aus über die Trägerschicht durchsetzende Drainagekanäle zutretende Flüssigkeit, z.B. Oberflächenwasser abgeführt werden kann. Der auf der Oberseite der bekannten Trägerbahn aufzubringende Geh- oder Fahrbelag soll dabei, z.B. über eine Substratschüttung nichthaftend auf der Trägerbahn aufgebracht werden.

Der Erfindung liegt die Aufgabe zugrunde, eine relativ dünnschichtige Trägerbahn für Boden- in Sonderfällen aber auch Wandbeläge zu schaffen, die - insbesondere auch im Falle nachträglicher Sanierung - eine dünne Belagskonstruktion auf abgedichteten Untergründen ermöglicht, wobei der eigentliche begehbare bzw. den Witterungseinflüssen ausgesetzte Belag durch Mörtel oder Kleber fest haftend mit der Trägerbahn verbindbar ist und die Trägerbahn während des Abbindens des Mörtels bzw. des Aushärtens des Klebers Halt bietet.

Ausgehend von einer Trägerbahn der eingangs erwähnten Art wird diese Aufgabe erfindungsgemäß dadurch gelöst, daß auf der Außenseite der Boden- bzw. Deckwände von von einer Seite der Folienebene vortretenden näpfchenartigen Vorsprüngen ein für gas- oder dampfförmige, flüssige und pastöse Medien durchlässiges Gittergewebe hoher Festigkeit vorgesehen ist. Dieses Gittergewebe stabilisiert nicht nur die Trägerbahn, sondern bildet praktisch eine Bewehrung in der die Fliesen oder Bodenplatten auf der Trägerbahn haltenden Mörtel- oder Kleberschicht, wodurch dem Entstehen von Rissen in der Mörtelschicht entgegengewirkt wird.

Das Gittergewebe ist dabei vorzugsweise - beispielsweise durch Verklebung - festhaftend auf den Boden- oder Deckwänden der näpfchenartigen Vorsprünge aufgebracht.

In den von einer Seite der Folienebene vortretenden, und zwar vorzugsweise den auf der in entgegengesetzter Richtung zu den das Gittergewebe tragenden Vorsprünge weisenden näpfchenartigen Vorsprünge sind zweckmäßig gas-, dampf- und flüssigkeitsdurchlässige Durchgangsöffnungen vorgesehen, durch welche aus der Mörtel- oder Kleberschicht austretende Feuchtigkeit oder Wasserdampf abgeführt wird. Auch eine Belüftung und Durchtrocknung der Mörtel- bzw. Kleberschicht von der Unterseite der Trägerbahn her ist somit sichergestellt. Gleichermaßen kann auch Restfeuchtigkeit von innenliegenden Estrichen über die Durchgangsöffnungen nachträglich nach außen ablüften.

Die Durchgangsöffnungen können dabei von schlitzartigen Durchfräsungen der näpfchenartigen Vorsprünge gebildet werden, welche jeweils die Bodenwand und wenigstens einen anschließenden Teilabschnitt der Umfangswandung des jeweiligen näpfchenartigen Vorsprungs durchsetzen.

In vorteilhafter Weiterbildung der Erfindung wird vorgeschlagen, daß wenigstens in Teilbereichen zwischen den belagseitig vortretenden, benachbarten näpfchenartigen Vorsprüngen mindestens ein zusätzlicher Vorsprung vorgesehen ist. Dadurch kann die Gefahr der Rißbildung der Mörtelschicht durch das beim Aushärtungsprozeß auftretenden Schwinden des Mörtelmaterials deutlich reduziert werden. Je größer das auszuhärtende Mörtelvolumen ist, desto größer ist in der Regel die Neigung zur Rißbildung. Risse im Mörtel können sich mit Wasser füllen und bei hohen Temperaturschwankungen oder bei Frost zum Abplatzen oder Ablösen des Belags führen. Die zusätzlichen Vorsprünge verringern einerseits das Volumen des mit Mörtel aufzufüllenden Raumes - führen also zu einer Einsparung von Mörtelmaterial - , andererseits "unterteilen" sie das zwischen den näpfchenartigen, den Belag bzw. das Gittergewebe tragenden Vorsprüngen verteilte Mörtelmaterial derart, daß das Material an einem großflächigem Schrumpfen beim Aushärtungsprozeß gehindert wird.

Dabei kann jeder zusätzliche Vorsprung eine geringere Höhe haben als die jeweils nach der gleichen Seite vortretenden näpfchenartigen Vorsprünge. Die Vorsprunghöhe wird man in Abhängigkeit von der Zusammensetzung des Mörtelmaterials und dem Schwundmaß wählen.

In vorteilhafter Ausgestaltung der Erfindung kann jeder zusätzliche Vorsprung eine rippenartig langgestreckte Form haben. Alternativ können statt jeweils eines langgestreckten zusätzlichen Vorsprungs aber auch mehrere Einzelvorsprünge zwischen benachbarten näpfchenartigen Vorsprüngen vorgesehen sein.

Es wird ferner vorgeschlagen, daß jeder zusätzliche Vorsprung integral aus dem Material der Trägerbahn ausgeformtist. Zwar besteht grundsätzlich auch die Möglichkeit, die Vorsprünge massiv auszubilden, doch bietet es sich an, die zusätzlichen Vorsprünge - im übrigen, wie auch die näpfchenartigen Vorsprünge - aus der Kunststoffolie in einem Warmverformungsprozeß zu formen. Dadurch wird erreicht, daß kein zusätzliches Kunststoff-Material für diese Vorsprünge benötigt wird.

Die jeweils nach der gleichen Seite vortretenden näpfchenartigen Vorsprünge haben vorzugsweise gleiche Form und gleiche Durchschnittsabmessungen sowie gleiche Höhe. Dabei können die nach entgegengesetzten Seiten vortretenden näpfchenartigen Vorsprünge auch unterschiedliche Höhe und/oder unterschiedliche Querschnittsformen bzw. -abmessungen haben. In der Regel werden die näpfchenartigen Vorsprünge in der Draufsicht auf ihre offene Mündung bzw. die Bodenoder Deckwand kreisförmig begrenzt sein, obwohl grundsätzlich auch andere Näpfchenformen, z.B. mit langovaler oder rautenförmiger sowie rechteckiger oder quadratischer Begrenzung verwirklichbar sind.

An den von der Folienebene zu den aufzubringen Boden- oder Wandbelägen vortretenden näpfchenartigen Vorsprünge kann jeweils wenigstens ein radial von deren Umfangswandung vorspringender niedriger Ansatz vorgesehen sein, insbeondere dann, wenn - in Sonderfällen - kein Gittergewebe vorgesehen ist, welches die Mörtel- oder Kleberschicht fest auf der Trägerbahn verankert, können solche radialen Ansätze von Vorteil sein, welche dann in im ausgehärteten Mörtel oder Kleber gebildete komplementären Hinterschneidungen eingreifen. Darüber hinaus können die radialen Ansätze auch zur Halterung und Sicherung von in dem Zwischenraum zwischen den näpfchenartigen Vorsprüngen verlegten, beispielsweise von einem erwärmten flüssigen Medium durchströmten Rohrleitungen dienen. Auch an den entgegengesetzt zu den aufzubringenden Boden- oder Wandbelägen vortretenden näpfchenartigen Vorsprüngen von der Folienebene vortretenden Vorsprüngen können solche niedrigen radialen Ansätze vorgesehen sein.

Dabei kann in beiden Fällen die Ausgestaltung entweder so getroffen sein, daß mehrere in Umfangsrichtung der näpfchenartigen Vorsprünge zueinander versetzt radial vorspringende niedrige Ansätze oder alternativ ein auf der Umfangswandung der näpfchenartigen Vorsprünge umlaufender niedriger Ringansatz vorgesehen ist.

In zweckmäßiger Weiterbildung der Erfindung kann die steife Kunststoffolie zumindest an zwei gegenüberliegenden parallelen Rändern schmale seitliche Randbereiche ohne von der Folienebene vortretende Vorsprünge aufweisen, welche jeweils in Überlappung mit seitlich anschließenden Randbereichen gleichartiger Trägerbahnen bringbar sind. Durch die Möglichkeit der überlappenden Verlegung der Trägerbahnen ist somit auch der Einsatz auf großflächigen Terrassen und Balkonen möglich.

Auf den Bodenwänden der entgegengesetzt zu den aufzubringenden Boden- oder Wandbelägen vorspringenden näpfchenartigen Vorsprüngen weisenden näpfchenartigen Vorsprünge kann ein zusätzlicher wärme- und/oder schalldämmender Belag vorgesehen sein. Eine zusätzliche Wärmedämmung ist beispielsweise dann zweckmäßig, wenn die erfindungsgemäße Trägerbahn unter auf Gebäude-Außenwänden vorzusehenden Wandbelägen vorgesehen wird.

Die Erfindung ist in der folgenden Beschreibung mehrerer Ausführungsbeispiele in Verbindung mit der Zeichnung näher erläutert, und zwar zeigt:
- Fig. 1: eine Draufsicht auf einen Teilabschnitt eines Ausführungsbeispiels. einer in der erfindungsgemäßen Weise aufgebauten Trägerbahn, gesehen in Richtung der Pfeile 1-1 in Fig. 2;
- Fig. 2: eine Schnittansicht, gesehen in Richtung der Pfeile 2-2 in Fig. 1;
- Fig. 3: eine Schnittansicht durch einen Balkon- oder Terrassen-Teilabschnitt, welcher unter Verwendung der in den Figuren 1 und 2 gezeigten Trägerbahn mit keramischen Fliesen belegt ist;
- Fig. 4: eine Schnittansicht einer für einen auf einer Gebäude-Außenwand aufzubringenden Belag vorgesehenen erfindungsgemäßen Trägerbahn;
- Fig. 5: eine der Fig. 1 entsprechende Ansicht eines Teilabschnitts eines abgewandelten ersten Ausführungsbeispiels einer erfindungsgemäßen Trägerbahn;
- Fig. 6: eine Schnittansicht, gesehen in Richtung der Pfeile 6-6 in Fig. 5;
- Fig. 7: eine der Fig. 1 entsprechende Ansicht eines Teilabschnitts eines abgewandelten zweiten Ausführungsbeispiels einer erfindungsgemäße Trägerbahn; und
- Fig. 8: eine Schnittansicht, gesehen in Richtung der Pfeile 8-8 in Fig. 7.

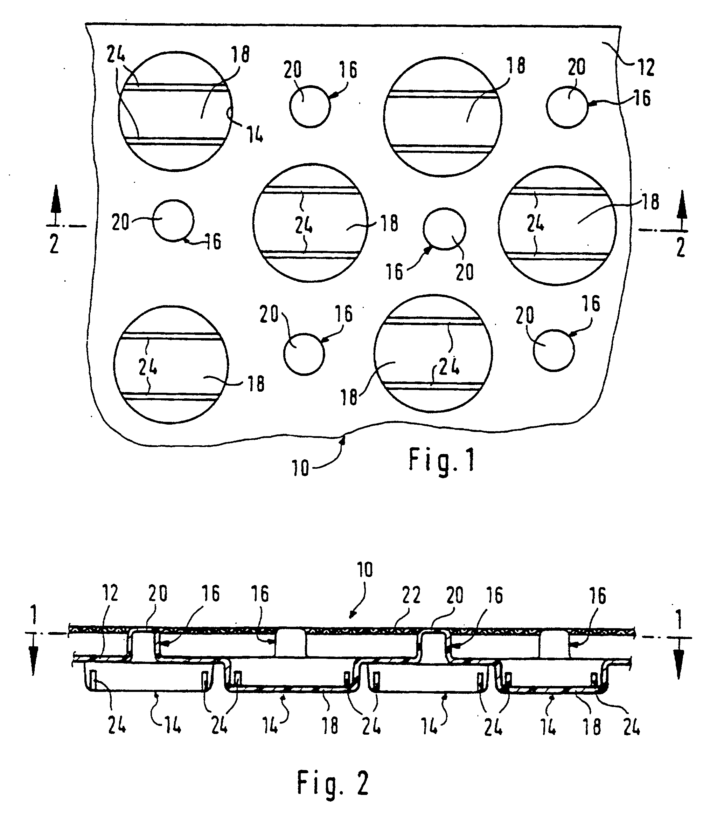

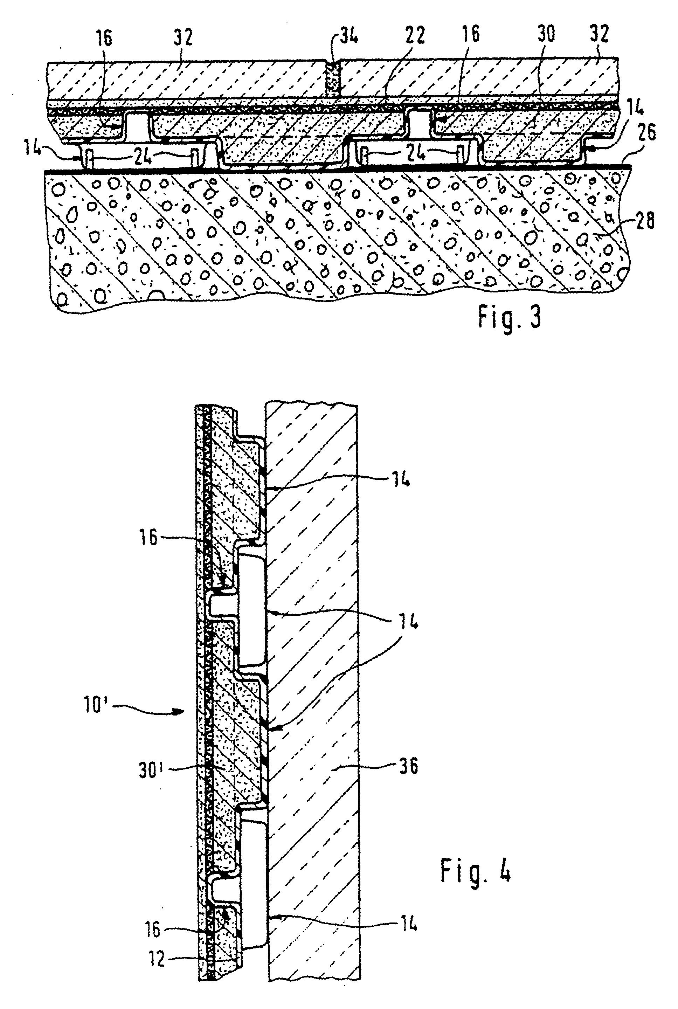

Die Figuren 1 und 2 zeigen ein in seiner Gesamtheit mit 10 bezeichnetes Ausführungsbeispiel einer erfindungsgemäßen Trägerbahn. Die Trägerbahn besteht aus einer ursprünglich ebenflächigen dünnen, steifen Kunststoffolie 12, in welcher in einem regelmäßigen Muster zueinander versetzt näpfchenartige Vertiefungen 14 bzw. 16 von der Folienebene aus nach entgegengesetzten Seiten eingeformt sind. Die Vorsprünge 14 und 16 sind im dargestellten Fall jeweils kreisförmig begrenzt und durch eine jeweils ebenflächige Bodenwand 18 bzw. Deckwand 20 abgeschlossen. Die Tiefe der Vorsprünge 14 und 16 von der Ebene der Folie 12 aus gemessen kann beim dargestellten Ausführungsbeispiel in der Größenordnung von vorzugsweise 5 bis 10 mm liegen, so daß die Trägerbahn 10 also insgesamt eine Dicke von ca. 10 bis 20 mm hat, wobei die näpfchenartigen Vorsprünge auch eine große Tiefe haben können und somit eine wesentlich größere Gesamtdicke der Folienbahn verwirklichbar ist. erkennbar ist, daß die in Fig. 1 bezogen auf die Zeichenebene vom Betrachter weg weisenden Vorsprünge 14 einen deutlich größeren Durchmesser als die in Fig. 1 aus der Zeichenebene zum Betrachter vorspringenden Vorsprünge 16 haben. Auf den Deckwänden 20 der Vorsprünge 16 ist ein - nur in Fig. 2 dargestelltes - hochfestes Gittergewebe 22 haftend aufgebracht, welches - wie nachstehend noch in Verbindung mit Fig. 3 näher erläutert wird - zur Armierung und Halterung eines auf die Oberseite der Trägerbahn 10 aufgebrachten Mörtels oder Klebers dient. Die haftende Verbindung des Gittergewebes 22 auf den Deckwänden 20 der näpfchenartigen Vorsprünge 16 kann durch Verklebung oder - aufgrund der thermoplastischen Eigenschaften des Materials der Folienbahn 12 - durch Warmeinpressen in die Außenseite der Deckwände 20 erfolgen.

Das Gittergewebe 22 ist in seiner Maschenweite so gewählt, daß noch bildsamer Mörtel oder Kleber durch das Gittergewebe hindurch auf die zugewandte Oberseite der Folienbahn 12 und in die napfförmigen Vorsprünge 14 eindringen kann.

In den Bodenwänden 18 der Vorsprünge 14 sind im dargestellten Fall jeweils zwei schlitzartige Durchgangsöffnungen 24 vorgesehen, die sich auch noch ein Stück weiter in die Umfangswandung der Vorsprünge 14 erstrecken und diese durchbrechen, wie in Fig. 2 erkennbar ist. Die schlitzartigen Durchbrechungen, die beispielsweise nach dem Einprägen bzw. Tiefziehen der näpfchenartigen Vorsprünge 14, 16 in die Folienbahn 12 in die Trägerbahn eingefräst sein können, erlauben also den Durchtritt von Flüssigkeit und Wasserdampf zur Unterseite der Trägerbahn, wodurch nicht nur das Aushärten bzw. Abbinden einer auf der Oberseite aufgetragenen Mörtel- oder Kleberschicht unterstützt, sondern auch der Durchtritt bzw. die Verdampfung von nachträglich in die Mörtelschicht eingedrungenem Niederschlagswasser zur Unterseite der Trägerbahn möglich wird, welches dann über den zwischen den Vorsprüngen 14 verbleibenden Hohlraum abgeführt werden kann. Der an der Unterseite der Trägerbahn 10 unter der Folienebene zwischen den Vorsprüngen 14 verbleibende Durchtrittsquerschnitt ist - trotz der relativ geringen Höhe der Vorsprünge 14 - hinreichend groß, um auch größere Mengen von schwallartig anfallendem Regenwasser sicher zu den Rändern eines Balkons oder einer Terrasse abzuleiten. Die erfindungsgemäße Trägerbahn kann deshalb auch zur nachträglichen Sanierung von ursprünglich nicht drainierten Balkonen oder Terrassen verwendet werden, wobei dann im Anschlußbereich an Türdurchbrüchen zur Terrasse bzw. zum Balkon niedrige Drainagegitter vorgesehen werden können, welche dort anfallendes Regenwasser zur Unterseite der Trägerbahn durchtreten lassen. Damit ist es möglich, auch solche Balkone oder Terrassen nachträglich zu sanieren und zu drainieren, bei denen die in solchen Türbereichen für nicht drainierte Balkone vorgeschriebene Anschlußhöhe von ca. 150 mm nicht gegeben ist.

In Fig. 3 ist ein Einbaubeispiel der Trägerbahn 10 auf einer an der Oberseite durch eine Abdichtung 26 abgedichteten 3alkon- oder Terrassen-Beton-Tragplatte 28 gezeigt. Es ist erkennbar, daß die Bodenwände 18 der Vorsprünge 14 der Trägerbahn 10 einfach auf die Abdichtung 26 aufgesetzt sind, d.h. daß eine haftende Verbindung zwischen der Trägerbahn 10 und der Beton-Tragplatte 28 nicht besteht, so daß bei unterschiedlichen horizontalen Dehnungen der Tragplatte 28 und der Trägerbahn 10 keine Scherbeanspruchungen zwischen den Trägerbahnen und der Abdichtung 26 auftreten und die Abdichtung beschädigen können.

In Fig. 3 ist weiter erkennbar, daß die Trägerbahn 10 auf der der Abdichtung 26 abgewandten Seite vollständig mit einem Haftmörtel gefüllt ist, welcher in dünner Lage auch noch über dem Gittergewebe 22 steht und die Unterseite von aufgelegten keramischen Fliesen 32 haftend auf der Trägerbahn 10 hält. Die Fugen zwischen den Fliesen 32 sind mit einem geeigneten Fugenmörtel 34 verfugt.

Es ist ersichtlich, daß das Gittergewebe 22 eine Bewehrung der ausgehärteten oder abgebundenen Mörtelschicht bildet, welche einer Bildung und Öffnung von zumindest größeren Rissen im Mörtel verhindert.

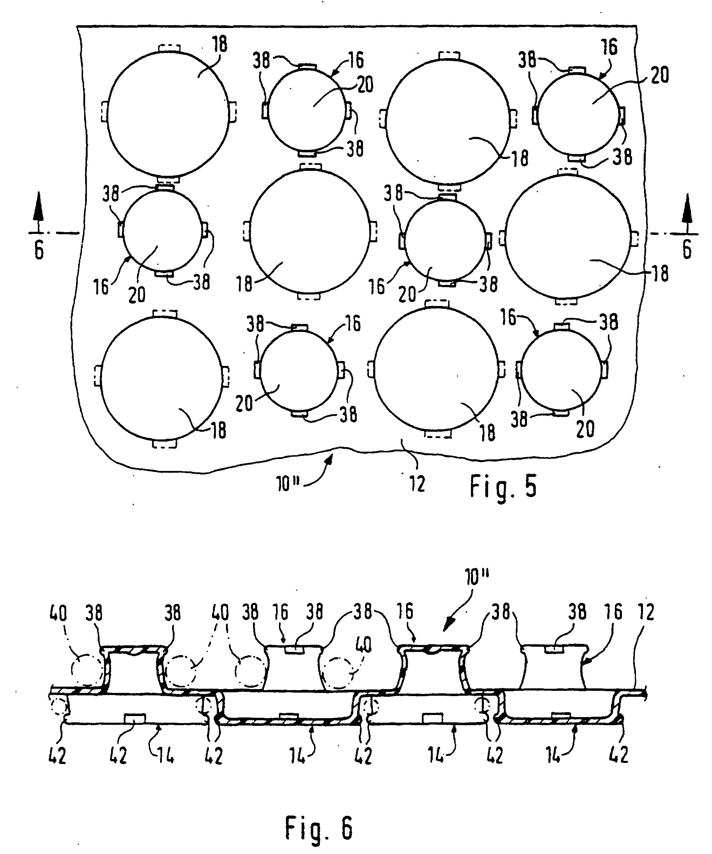

Fig. 4 zeigt die Verwendung einer der Trägerbahn 10 im wesentlichen entsprechenden Trägerbahn 10' in senkrechter Anordnung, wie sie beispielsweise an der Außenwand eines Gebäudes als hinterlüftete Trägerbahn für Außenputz 30' und/oder zur Halterung einer - nicht gezeigten - Verblendung mit keramischen Fliesen, Klinkerriemchen, Schindeln etc. dienen kann. Der grundsätzlich Aufbau der Trägerbahn 10' entspricht der in Verbindungen mit den Figuren 1 bis 3 beschriebenen Trägerbahn 10, wobei im dargestellten Fall zusätzlich auf der gebäudewandzugekehrten Unterseite noch eine zusätzliche Wärmedämmschicht 36 aus Hartschaum-Plattenmaterial oder Mineralfilzplatten vorgesehen ist. Diese Wärmedämmschicht kann Teil der Trägerbahn 10', d.h. mit den Böden 18 der näpfchenartigen Vorsprünge 14 verklebt oder in anderer Weise verbunden sein. Alternativ kann die Wärmedämmschicht 36 auch gesondert hergestellt und vor der Aufbringung der Trägerbahn 10' auf der - nicht gezeigten - Gebäudewand haftend aufgebracht sein, wobei zweckmäßig eine mechanische Befestigung mittels Tellerdübeln o.dgl. gewählt wird.

Sofern die Trägerbahn 10' nur zur Hinterlüftung des Außenwand-Belages des Gebäudes, d.h. des Putzes bzw. der Fliesen, Riemchen, Schindeln etc. dient, können die bei der Trägerbahn 10 vorgesehenen Durchgangsöffnung 24 auch entfallen, obwohl sie auch bei der Trägerbahn 10' insofern von Vorteil sind, als sie ein schnelleres Abbinden bzw. Aushärten und Durchtrocknen der Putz- bzw. Mörtelschicht 30' ermöglichen. Auch die Trocknung des Putzes 30' bei Durchnässung durch Schlagregen wird gefördert.

In den Figuren 5 und 6 ist eine weiter abgewandelte Trägerbahn 10", die - entsprechend den Trägerbahnen 10 und 10' - aus einer ursprünglich ebenflächigen steifen Kunststoffolienbahn 12 nach gegenüberliegenden Seiten herausgeformte näpfchenartige Vorsprünge 14 und 16 aufweist, von denen im speziellen Fall die Vorsprünge 16 ein vergleichsweise etwas größeren Durchmesser und eine größere Höhe als die entsprechenden Näpfchen der Trägerbahn 10 und 10' haben.

Im dargestellten Fall sind an den nach oben vortretenden Vorsprüngen 16 jeweils vier in gleichmäßigen Abständen in Umfangsrichtung zueinander versetzte radial vortretende niedrige Ansätze 38 vorgesehen, während ein dem Gittergewebe 22 entsprechendes Gittergewebe ebenso wie den schlitzartigen Durchgangsöffnungen 24 der Trägerbahn 10 entsprechende Durchgangsöffnungen nicht vorgesehen sind, obwohl sie andererseits - in speziellen Fällen - wieder vorgesehen sein können.

An den nach oben vortretenden näpfchenartigen Vorsprüngen 16 sind im Bereich des Bodens 20 radial vortretende Absätze 38 vorgesehen, welche die Aufgabe haben, die Trägerbahn 10" in einer aufgebrachten Mörtelschicht zu verankern, so daß nach dem Aushärten oder Abbinden des Mörtels eine Trennung der Folienbahn von der (nicht gezeigten) Mörtelschicht ausgeschlossen ist. Außerdem erlaubt es die größere Höhe der Vorsprünge 16 auch vor dem Aufbringen des Mörtels auf die bereits auf dem Untergrund aufgesetzte Trägerbahn 10 ein Leitungssystem von mit einer wärmeträger-Flüssigkeit durchströmte, in Fig. 6 strichpunktiert angedeutete dünnwandige Kunststoff- oder Metallröhrchen 40 zu verlegen, die während des Verlegevorgangs und bei noch nicht aufgebrachter Mörtelschicht von den radial vortretenden Ansätzen unterhalb der Böden 20 in den Zwischenräumen zwischen den Vorsprüngen 16 gehalten werden, und nach Verfüllung mit und Aushärten des Mörtels ein Bodenheizungssystem bilden.

Im speziellen Fall sind auch an den nach unten vortretenden näpfchenartigen Vorsprüngen 14 solche radialen Ansätze 42 vorgesehen, welche im Falle einer Halterung der Trägerbahn 10" in einem Mörtelbett wiederum eine untrennbare Verbindung der Trägerbahn im Mörtelbett gewährleisten. Falls die Trägerbahn 10" andererseits - wie im Zusammenhang mit der Trägerbahn 10 beschrieben - nur auf dem Untergrund aufgesetzt wird, um die Trägerbahn in horizontaler Richtung vom Untergrund zu entkoppeln, entfällt eine solche Funktion der radialen Ansätze 40 und diese können auch entfallen. Der zwischen der Unterseite der Trägerbahn 10" und dem Untergrund bestehende freie Raum kann dann zur - gegebenenfalls auch nachträglichen - Verlegung von Leitungen z.B. elektrischen Leitungen, verwendet werden.

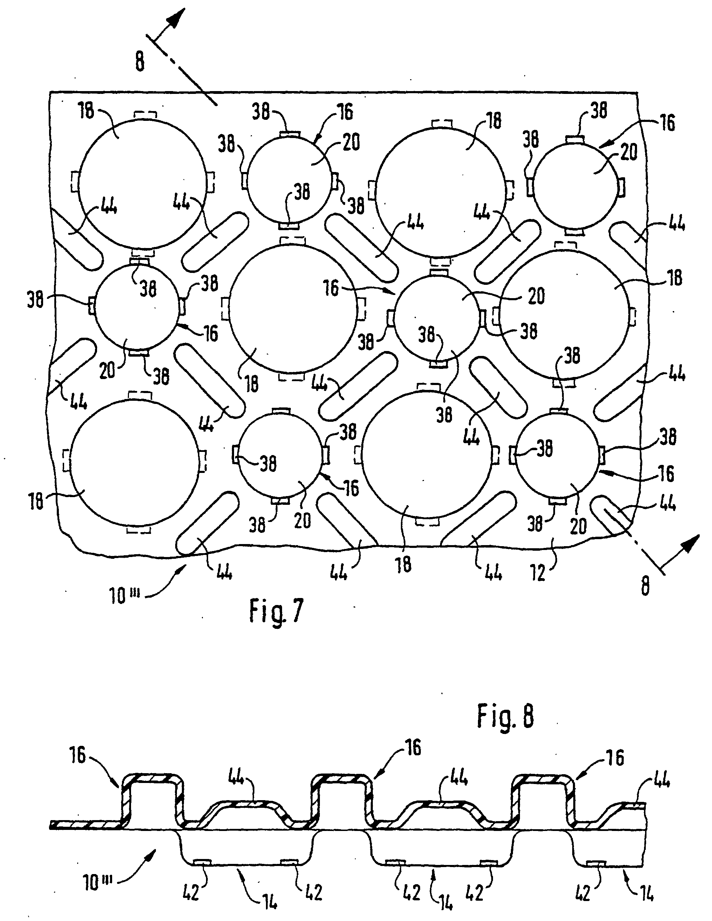

In den Figuren 7 und 8 ist eine abgewandelte Trägerbahn 10"' gezeigt, die in ihrem Grundaufbau der Trägerbahn 10" gemäß Fig. 5 entspricht. Die Trägerbahn 10" ' weist jedoch zusätzliche Vorsprünge 44 auf, die auf der dem Betrachter zugewandten Seite der Trägerbahn zwischen jeweils zwei belagseitig vortretenden, benachbarten näpfchenartigen Vorsprüngen 16 angeordnet sind. Wie zu sehen, ist zwischen den benachbarten näpfchenartigen Vorsprüngen 16 lediglich ein einzelner zusätzlicher Vorsprung mit einer langgestreckten Form vorgesehen. Es ist jedoch durchaus möglich, statt des einzelnen mehrere zusätzliche Vorsprünge zwischen den benachbarten näpfchenartigen Vorsprüngen 16 anzuordnen, deren Form auch beispielsweise rund oder eckig gewählt sein kann.

In Fig. 8 ist erkennbar, daß die Vorsprünge 44 eine geringere Höhe haben als die näpfchenartigen Vorsprünge 16. Das Mörtelmaterial kann bei niedrigeren zusätzlichen Vorsprüngen besonders gut auf die Trägerbahn 10"' aufgebracht und gleichmäßig verteilt werden. Es ist jedoch auch möglich, die zusätzlichen Vorsprünge 44 ebenso hoch auszubilden, wie die näpfchenartigen Vorsprünge 16.

Es ist ersichtlich, daß im Rahmen des Erfindungsgedankens Abwandlungen und Weiterbildungen der beschriebenen Ausführungsbeispiele verwirklichbar sind, welche sich z.B. auf die Abmessungen und die äußere Form der näpfchenartigen Vorsprünge 14 und 16 beziehen. Anstelle von kreisförmigen Vorsprüngen können auch quadratische, rechteckige, ovale oder in irgendeiner Weise polygonal begrenzte Vorsprünge vorgesehen sein. Wesentlich ist lediglich, daß solche Vorsprünge von der Ebene der Folienbahn 12 aus nach entgegengesetzten Seiten vortreten, und daß sie mit im wesentlichen ebenflächigen Böden versehen sind. Anstelle mehrerer zueinander versetzter radialer Ansätze 38 oder 42 kann jeweils am zugehörigen Vorsprung 16 bzw. 14 auch ein geschlossen umlaufender radialer Ringansatz ausgebildet sein.

## Patentansprüche

1. Trägerbahn (10; 10'; 10") für Witterungseinflüssen ausgesetzte Boden- oder Wandbeläge, welche eine steife Kunststoffolie (12) mit einem Muster von aus.der Folienebene vortretenden, voneinander beabstandeten näpfchenartigen Vorsprüngen (14; 16) mit jeweils einer im wesentlichen ebenflächigen, parallel zur Folienebene verlaufenden Boden- bzw. Deckwand (18; 20) aufweist, wobei die näpfchenartigen Vorsprünge (14; 16) abwechselnd von den gegenüberliegenden Seiten der Kunststoffolie (12) vortreten,
**dadurch gekennzeichnet,**
**daß** auf der Außenseite der Boden- bzw. Deckwände (18; 20) von von einer Seite der Folienebene vortretenden näpfchenartigen Vorsprüngen (14; 16) ein für gas- oder dampfförmige, flüssige und pastöse Medien durchlässiges Gittergewebe (22) hoher Festigkeit vorgesehen ist.

2. Trägerbahn nach Anspruch 1, **dadurch gekennzeichnet, daß** das Gittergewebe (22) auf den von der Folienebene zu den aufzubringenden Boden- oder Wandbelägen vortretenden näpfchenartigen Vorsprüngen (16) vorgesehen ist.

3. Trägerelement nach Anspruch 2, **dadurch gekennzeichnet, daß** das Gittergewebe (22) auf den Boden- bzw. Deckwänden (18; 20) der näpfchenartigen Vorsprünge (14; 16) haftend aufgebracht ist.

4. Trägerbahn nach einem der Ansprüche 1 bis 3, **dadurch gekennzeichnet, daß** in von einer Seite der Folienebene vortretenden näpfchenartigen Vorsprüngen (14 oder 16) gas-, dampf- und flüssigkeitsdurchlässige Durchgangsöffnungen (24) vorgesehen sind.

5. Trägerbahn nach einem der Ansprüche 1 bis 3 und Anspruch 5, **dadurch gekennzeichnet, daß** die Durchgangsöffnungen (24) in den in entgegengesetzter Richtung zu den das Gittergewebe (22) tragenden näpfchenartigen Vorsprüngen (16) von der Folienebene vortretenden näpfchenartigen Vorsprüngen (14) vorgesehen sind.

6. Trägerbahn nach Anspruch 4 oder 5, **dadurch gekennzeichnet, daß** die Durchgangsöffnungen (24) von schlitzartigen Durchfräsungen der näpfchenartigen Vorsprünge (14) gebildet werden, welche jeweils die Bodenwand (18) und wenigstens einen anschließenden Teilabschnitt der Umfangswandung des jeweiligen näpfchenartigen Vorsprungs (14) durchsetzen.

7. Trägerbahn nach einem der Ansprüche 1 bis 6, **dadurch gekennzeichnet, daß** wenigstens in Teilbereichen zwischen den belagseitig vortretenden, benachbarten näpfchenartigen Vorsprüngen (16) mindestens ein zusätzlicher Vorsprung (44) vorgesehen ist.

8. Trägerbahn nach Anspruch 7, **dadurch gekennzeichnet, daß** jeder zusätzliche Vorsprung (44) eine geringere Höhe hat als die jeweils nach der gleichen Seite vortretenden näpfchenartigen Vorsprünge (16).

9. Trägerbahn nach Anspruch 7 oder 8, **dadurch gekennzeichnet, daß** jeder zusätzliche Vorsprung (44) eine langgestreckte Form hat.

10. Trägerbahn nach einem der Ansprüche 7 bis 9, **dadurch gekennzeichnet, daß** jeder zusätzliche Vorsprung (44) integral aus dem Material der Trägerbahn ausgeformt ist.

11. Trägerbahn nach einem der Ansprüche 1 bis 10, **dadurch gekennzeichnet, daß** die jeweils nach der gleichen Seite vortretenden näpfchenartigen Vorsprünge (14; 16) gleiche Form und gleiche Querschnittsabmessungen sowie gleiche Höhe haben.

12. Trägerbahn nach einem der Ansprüche 1 bis 10, **dadurch gekennzeichnet, daß** die nach entgegengesetzten Seiten vortretenden näpfchenartigen Vorsprünge (14; 16) unterschiedliche Höhe und/oder unterschiedliche Querschnittsformen bzw. -abmessungen haben.

13. Trägerbahn nach einem der Ansprüche 1 bis 12, **dadurch gekennzeichnet, daß** an den von der Folienebene zu den aufzubringenden Boden- oder Wandbelägen vortretenden näpfchenartigen Vorsprüngen (16) jeweils wenigstens ein radial von deren Umfangswandung vorspringender niedriger Ansatz (38) vorgesehen ist.

14. Trägerbahn nach einem der Ansprüche 1 bis 13, **dadurch gekennzeichnet, daß** an den entgegengesetzt zu den aufzubringenden Boden- oder Wandbelägen vortretenden näpfchenartigen Vorspringen von der Folienebene vortretenden näpfchenartigen Vorsprüngen (14) jeweils wenigstens ein radial von der Umfangswandung vorspringender niedriger Ansatz (42) vorgesehen ist.

15. Trägerbahn nach Anspruch 13 oder 14, **dadurch gekennzeichnet, daß** jeweils mehrere in Umfangsrichtung der näpfchenartigen Vorsprünge (14; 16) zueinander versetzte radial vorspringende niedrige Ansätze (42; 38) vorgesehen sind.

16. Trägerbahn nach Anspruch 13 oder 14, **dadurch gekennzeichnet, daß** auf der Umfangswandung der näpfchenartigen Vorsprünge (14; 16) ein umlaufender niedriger Ring-Ansatz vorgesehen ist.

17. Trägerbahn nach einem der Ansprüche 1 bis 16, **dadurch gekennzeichnet, daß** die steife Kunststoffolie (12) zumindest an zwei gegenüberliegenden parallelen Rändern schmale seitliche Randbereiche ohne von der Folienebene vortretende Vorsprünge (14; 16; 44) aufweist, welche jeweils in Überlappung mit seitlich anschließenden Randbereichen gleichartiger Trägerbahnen (10; 10'; 10") bringbar sind.

18. Trägerbahn nach einem der Ansprüche 1 bis 17, **dadurch gekennzeichnet, daß** auf den Bodenwänden (18) der entgegengesetzt zu den aufzubringenden Boden- oder Wandbelägen vorspringenden näpfchenartigen Vorsprünge (16) weisenden näpfchenartigen Vorsprünge (14) ein zusätzlicher wärmeund/oder schalldämmender Belag (36) vorgesehen ist.

## Claims

1. Support sheet (10; 10'; 10") for floor and wall coverings which are exposed to the effects of the weather, having a rigid plastic film (12) with a pattern of cup-like projections (14; 16) spaced from one another and projecting out of the film plane and having a bottom and top wall (18; 20) respectively with a substantially planar surface and extending parallel to the film plane, the cup-like projections (14; 16) projecting alternately from the opposite sides of the plastic film (12), **characterised in that** on the outer face of the bottom and top walls (18; 20) respectively of cup-like projections (14; 16) projecting from one side of the film plane a high-strength mesh (22) is provided which is permeable to gaseous or vapourous, liquid and pasty agents.

2. Support sheet as claimed in Claim 1, **characterised in that** the mesh (22) is provided on the cup-like projections (16) which project from the foil plane to the floor or wall coverings to be attached.

3. Support sheet as claimed in Claim 2, **characterised in that** the mesh (22) is bonded to the bottom or top walls (18; 20) respectively of the cup-like projections (14; 16).

4. Support sheet as claimed in one of Claims 1 to 3, **characterised in that** through openings (24) which are permeable to gas, vapour and liquid are provided in cup-like projections (14 or 16) projecting from one side of the film plane.

5. Support sheet as claimed in one of Claims 1 to 3 and Claim 5, **characterised in that** the through openings (24) are provided in cup-like projections (14) projecting from the film plane in the opposite direction to the cup-like projections (16) bearing the mesh (22).

6. Support sheet as claimed in Claim 4 or 5, **characterised in that** the through openings (24) are formed by milled slots in the cup-like projections (14) which in each case pass through the bottom wall (18) and at least an adjoining portion of the peripheral wall of the respective cup-like projection (14).

7. Support sheet as claimed in one of Claims 1 to 6, **characterised in that** at least one additional projection (44) is provided at least in part-zones between the adjacent cup-like projections (16) projecting on the side with the covering.

8. Support sheet as claimed in Claim 7, **characterised in that** each additional projection (44) has a smaller height than the cup-like projections (16) projecting in each case towards the same side.

9. Support sheet as claimed in Claim 7 or 8, **characterised in that** each additional projection (44) has an elongate shape.

10. Support sheet as claimed in one of Claims 7 to 9, **characterised in that** each additional projection (44) is formed integrally from the material of the support sheet.

11. Support sheet as claimed in one of Claims 1 to 10, **characterised in that** the cup-like projections (14; 16) projecting in each case towards the same side have the same shape and the same cross-sectional dimensions as well as the same height.

12. Support sheet as claimed in one of Claims 1 to 10, **characterised in that** the cup-like projections (14; 16) projecting towards opposite sides have a different height and/or different cross-sectional shapes or cross-sectional dimensions.

13. Support sheet as claimed in one of Claims 1 to 12, **characterised in that** at least one low shoulder (38) projecting radially from the peripheral wall is provided in each case on the cup-like projections (16) projecting from the film plane to the floor or wall coverings to be applied.

14. Support sheet as claimed in one of Claims 1 to 13, **characterised in that** at least one low shoulder (42) projecting radially from the peripheral wall is provided in each case on the cup-like projections (14) projecting from the film plane opposite the cup-like projections projecting to the floor or wall coverings to be applied.

15. Support sheet as claimed in Claim 13 or 14, **characterised in that** in each case a plurality of radially projecting low shoulders (42, 38) are provided which are offset with respect to one another in the peripheral direction of the cup-like projections (14; 16).

16. Support sheet as claimed in Claim 13 or 14, **characterised in that** a peripheral annular shoulder is provided on the peripheral wall of the cup-like projections (14; 16).

17. Support sheet as claimed in one of Claims 1 to 16, **characterised in that** at least on two opposing parallel edges the rigid plastic film (12) has narrow lateral edge regions without projections (14; 16; 44) projecting from the film plane, and the said edge regions can be made in each case to overlap with laterally adjoining edge regions of similar support sheets (10; 10'; 10").

18. Support sheet as claimed in one of Claims 1 to 17, **characterised in that** an additional heat-insulating and/or sound-insulating covering (36) is provided on the bottom walls (18) of the cup-like projections (14) pointing in the opposite direction to cup-like projections (16) projecting to the floor or wall coverings to be applied.

## Revendications

1. Bande support (10; 10'; 10") pour revêtements de sol ou de mur exposés aux influences atmosphériques, qui présente une feuille de plastique rigide (12) ayant un réseau de saillies du genre petit godet (14 ; 16) espacées saillant du plan de la feuille et ayant chacune une paroi de fond ou de couverture plane (18; 20) parallèle au plan de la feuille, les saillies du genre petit godet (14; 16) saillant alternativement d'un côté et de l'autre de la feuille de plastique (12),
**caractérisée par le fait**
**que** sur le côté extérieur des parois de fond ou de couverture (18; 20) de saillies du genre petit godet (14; 16) saillant d'un côté du plan de la feuille est prévu un canevas (22) à haute résistance perméable aux gaz ou vapeurs, aux liquides et aux matières pâteuses.

2. Bande support selon la revendication 1, **caractérisée par le fait que** le canevas (22) est prévu sur les saillies du genre petit godet (16) qui font saillie du plan de la feuille vers les revêtements de sol ou de mur à appliquer.

3. Bande support selon la revendication 2, **caractérisée par le fait que** le canevas (22) est appliqué par adhérence sur les parois de fond ou de couverture (18; 20) des saillies du genre petit godet (14 ; 16).

4. Bande support selon l'une des revendications 1 à 3, **caractérisée par le fait que** dans des saillies du genre petit godet (14 ou 16) saillant d'un côté du plan de la feuille sont prévues des ouvertures de passage (14) perméables aux gaz, aux vapeurs et aux liquides.

5. Bande support selon l'une des revendications 1 à 3 et la revendication 4, **caractérisée par le fait que** les ouvertures de passage (24) sont prévues dans les saillies du genre petit godet (14) qui font saillie du plan de la feuille dans la direction opposée aux saillies du genre petit godet (16) qui portent le canevas (22).

6. Bande support selon l'une des revendications 4 et 5, **caractérisée par le fait que** les ouvertures de passage (24) sont formées par des fraisures traversantes du genre fente des saillies du genre petit godet (14) qui traversent chacune la paroi de fond (18) et au moins une partie contiguë de la paroi périphérique de la saillie du genre petit godet (14).

7. Bande support selon l'une des revendications 1 à 6, **caractérisée par le fait qu'**au moins une saillie supplémentaire (44) est prévue au moins dans des zones entre les saillies du genre petit godet (16) voisines saillant du côté du revêtement.

8. Bande support selon la revendication 7, **caractérisée par le fait que** chaque saillie supplémentaire (44) a une plus petite hauteur que les saillies du genre petit godet (16) saillant du même côté.

9. Bande support selon l'une des revendications 7 et 8, **caractérisée par le fait que** chaque saillie supplémentaire (44) a une forme allongée.

10. Bande support selon l'une des revendications 7 à 9, **caractérisée par** 1e fait que chaque saillie supplémentaire (44) est faite dans la matière de la bande support.

11. Bande support selon l'une des revendications 1 à 10, **caractérisée par le fait que** les saillies du genre petit godet (14; 16) saillant du même côté ont la même forme, les mêmes dimensions de section et la même hauteur.

12. Bande support selon l'une des revendications 1 à 10, **caractérisée par le fait que** les saillies du genre petit godet (14 ; 16) saillant de côtés opposés ont une hauteur différente et/ou des formes ou dimensions de section différentes.

13. Bande support selon l'une des revendications 1 à 12, **caractérisée par le fait que** sur chacune des saillies du genre petit godet (16) saillant du plan de la feuille vers les revêtements de sol ou de mur à appliquer est prévu au moins un appendice bas (38) saillant radialement de la paroi périphérique de celles-ci.

14. Bande support selon l'une des revendications 1 à 13, **caractérisée par le fait que** sur chacune des saillies du genre petit godet (14) saillant du plan de la feuille à l'opposé des saillies du genre petit godet saillant vers les revêtements de sol ou de mur à appliquer est prévu au moins un appendice bas (42) saillant radialement de la paroi périphérique.

15. Bande support selon l'une des revendications 13 et 14, **caractérisée par le fait qu'**il est prévu plusieurs appendices bas (42 ; 38) saillant radialement décalés les uns des autres dans la direction circonférentielle de la saillie du genre petit godet (14; 16).

16. Bande support selon l'une des revendications 13 et 14, **caractérisée par le fait que** sur la paroi périphérique des saillies du genre petit godet (14 ; 16) est prévu un appendice annulaire bas périphérique.

17. Bande support selon l'une des revendications 1 à 16, **caractérisée par le fait que** la feuille de plastique rigide (12) présente au moins sur deux bords parallèles opposés des zones de bord latérales étroites sans saillies (14; 16; 44) saillant du plan de la feuille qui peuvent être mises chacune en recouvrement avec des zones de bord contiguës latéralement de bandes supports semblables (10; 10' ; 10").

18. Bande support selon l'une des revendications 1 à 17, **caractérisée par le fait qu'**un revêtement isolant thermique et/ou acoustique supplémentaire (36) est prévu sur les parois de fond (18) des saillies du genre petit godet (14) dirigées à l'opposé des saillies du genre petit godet (16) saillant vers les revêtements de sol ou de mur à appliquer.
